Europäisches Patentamt

European Patent Office

Office européen des brevets

(11) Publication number: **0 250 382**
**A2**

# (12) EUROPEAN PATENT APPLICATION

(21) Application number: 87850189.9

(22) Date of filing: **11.06.87**

(51) Int. Cl.⁴: **C 01 B 25/234**

(30) Priority: **19.06.86 SE 8602734**

(43) Date of publication of application:
**23.12.87 Bulletin 87/52**

(84) Designated Contracting States:
**DE ES FR GB IT NL SE**

(71) Applicant: **SANDVIK AKTIEBOLAG**
**S-811 81 Sandviken 1 (SE)**

(72) Inventor: **Berglund, Per Göran**
**Odengatan 24**
**S-811 31 Sandviken (SE)**

**Costabello, Alberto**
**Via Giotto 2**
**I-28100 Novara (IT)**

**Ruben, Hans Arvid**
**Hallonstigen 1**
**S-444 00 Stenungsund (SE)**

(74) Representative: **Östlund, Alf Olof Anders et al**
**Sandvik AB Patent Department**
**S-811 81 Sandviken (SE)**

(54) Metallic heat exchanger used in the forced-circulation process for the evaporation of phosphoric acid.

(57) In the concentration of wet process phosphoric acid in a forced-circulation evaporation loop, at which a metallic multi-pass heat exchanger is used, it has been found advantageous to use a horizontal heat exchanger instead of the conventional vertical design.

FIG. 2

## Description

Metallic heat exchanger used in the forced-circulation process for the evaporation of phosphoric acid.

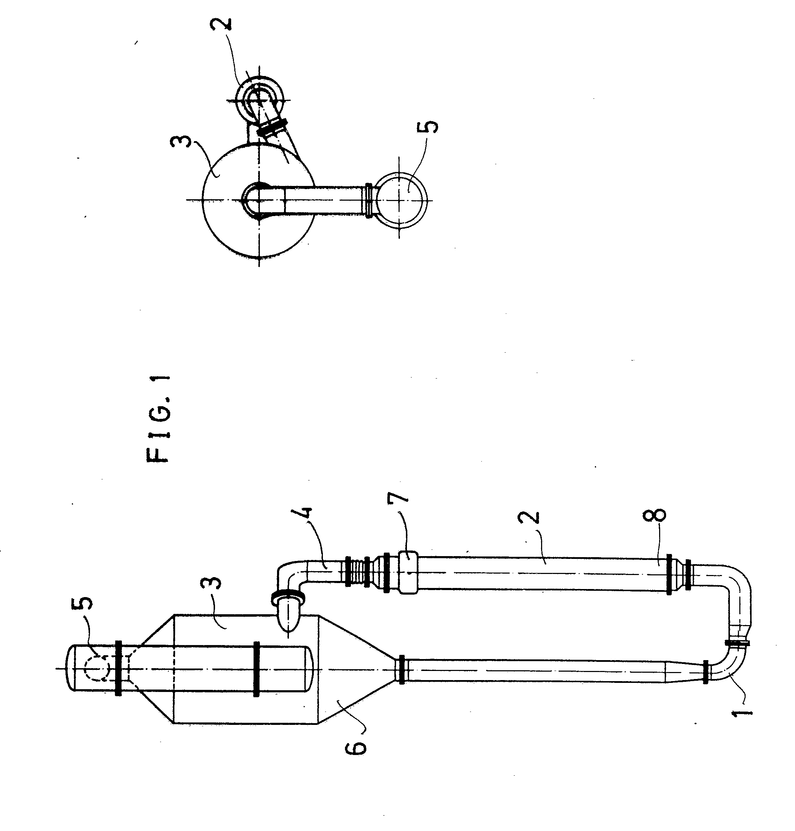

In the production of phosphoric acid, the most frequent system employed to concentrate the filtered acid to the desired strength, is forced-circulation evaporation, Figure 1. The circulation loop consists of a pump 1, a heat exchanger 2, a vapour body 3, and the interconnecting piping. The acid feed 4 is situated between the heat exchanger and the vapour body. The pump forces the acid through the exchanger, where it is heated and then flashed as it enters the vapour body. The vapours leave the system at the outlet 5 and the acid is recycled. The concentrate leave the vapour body at the lower part 6 of said body. As heating medium, steam is normally used, but sometimes also hot water. In the normal case, the steam comes in at the top 7 of the the heat exchanger and the condensate leaves at the bottom 8.

The technical phosphoric acid circulating in the loop is very agressive; the high temperatures used in heat exchangers - steam temperatures of 120-130°C are common -result in service conditions that are much too corrosive for ordinary stainless steels. For corrosion resistance, the heat exchangers are therefore normally fitted with tubes or blocks of impervious graphite, or with tubes of high-alloy stainless steels or nickelbase alloys.

Graphite often gives serious problems, due to its brittleness, in connection with steam chocks, erosion or fracture at mechanical cleaning. A metallic material, being strong and ductile, have clear advantages provided its corrosion resistance is sufficient. One such alloy is the "Sandvik Sanicro 28". It was developed for use in this application, and has won a broad acceptance by the industry.

Fouling of the heat exchanger is the major problem in this process, due to gypsum and other inverse solubility salts precipitating on the heat exchanger walls, reducing rapidly the heat transfer rate. A particularly rapid fouling of the exchanger takes place if boiling occurs in the tubes. This will happen if the static liquid head above the exchanger is unsufficient. The loop design and service parameters must therefore be selected so as to prevent fouling as much as possible.

Contrary to normal salts, inverse solubility salts exhibit decreasing saturation concentration beyond a certain temperature. As a consequence, crystalline deposits start to form if such solutions get in contact with heated surfaces. From numerous observations, some typical behaviour patterns of fouling can be rationalized.

In principle, the net fouling rate can be expressed as the difference betwen a deposition and removal rate function.

$$\frac{d(\,X_f\,\kappa_f\,)}{dt} = \Phi_d - \Phi_r$$

where $\tau_f$ is the thickness of the fouling deposit
$\kappa_f$ is the effective thermal conductivity of the layer
$\varphi_d$ is the rate of the deposition

$\varphi_r$ is the rate of removal

The behaviour of $\varphi_d$ and $\varphi_r$ is subject to effects of a large number of parameters. However, it is known that of different deposition rate factors, $\varphi_d$, the reaction rate controlled deposition, which is applicable, e.g., to crystallization of salts, is proportional to a reaction rate constant. This constant, $\kappa_r$, is defined as:

$$\kappa_r = C \exp\left( -\frac{E}{R_g T_s} \right)$$

where $T_s$ is the fluid-solid interface temperature
C is the proportionality constant
E is the activation energy
$R_g$ is the universal gas constant

The exponential temperature relationship of this type of deposit mechanism requires careful attention to the effect of design wall temperatures on deposition rates.

The rate of removal of deposits, $\varphi_r$, on the other hand, may be expressed as a function of a force balance between fluid shear and deposit bond resistance. Whereas the deposit bond resistance, which is determined for any given salt, cannot as such be controlled externally, the fluid shear, equal to the friction component of the fluid, can be influenced. The fluid shear is proportional to $(v/A_c)^2$
where $v$ = flow rate through the tubes
$A_c$ = the cross section area for flow

It appears from this relationship that keeping up the flow rate is very important in order to increase the removal rate. It also appears that the smaller the cross section area, at a given flow rate, the higher the fluid shear.

While many other effects may influence a specific fouling process, it appears from the above that of the operational variables, the two most important ones are flow rate and wall temperature. In order to minimize the fouling, the flow rate should be as high as possible and the wall temperature as low as possible.

Fouling leads to a reduced production rate and to increased pressure drop. This requires regular cleaning; depending on which phosphate is being used, cleaning several times a week may be necessary. Rapid and trouble-free cleaning is therefore essential for reliable and economical service. Circulating water, high-pressure water, chemical methods and mechanical means are used. Important for all is that cleaning should be performed thoroughly in order to completely remove the scale, and without any harm to the equipment. The brittleness of graphite exchangers easily lead to cracked tubes or blocks when cleaned mechanically. This risk is eliminated with metallic tubes.

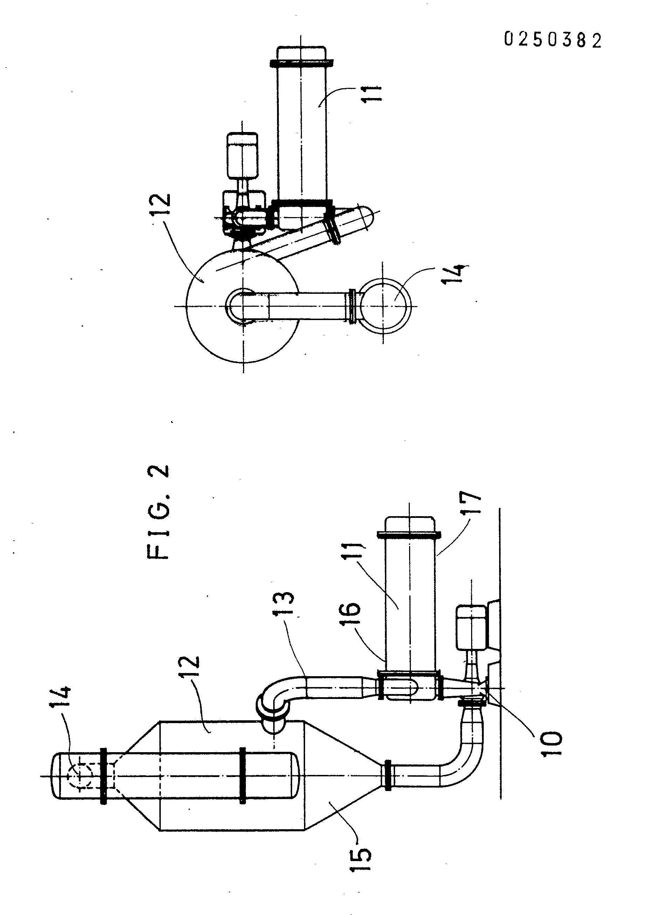

According to the invention, illustrated in Figure 2, it has been found that several advantages can be obtained by using a horizontal heat exchanger instead of the conventional vertical design.

In Figure 2, the circulation loop consists of a pump 10, a heat exchanger 11, a vapour body 12 and the interconnecting piping. The acid feed 13 is situated between the heat exchanger and the vapour body. The vapours leave the system at the outlet 14 and the concentrate goes out at the lower part 15 of the vapour body. The steam comes in at the top 16 of the heat exchanger and the condensate goes out at the bottom 17.

The horizontal heat exchanger admits the acid to pass the metallic tubes at flow rates in the 2 to 5 m/s range. Besides an outer case the heat exchanger essentially consists of metal tubes having an inner diameter in the 20 to 40 mm size range.

The exchanger is heated with automatically desuperheated steam, the pressure of which is automatically compensated in case of fouling. Tubes in the 20 to 40 mm size range, which are used depending of the production rate of the unit, permit to select the optimal service parameters for every particular case, taking, e.g., actual flow and available pump head into account. In general, the tubes are so selected that the inner diameter being 20-25, 25-30, 30-35, 35-40 mm of size.

The horizontal exchanger permits keeping a sufficient static head above the exchanger, to prevent boiling and thereby limit fouling in the tubes. This is achieved at lower total height of the installation compared with vertical exchanger design. The horizontal exchanger also facilitates the cleaning, thereby reducing down-time to a minimum.

Automatic desuperheating of the steam eliminates high wall temperature peaks close to the steam inlet, thereby minimizing the fouling rate in this area.

The automatic rise in steam pressure required to obtain a constant duty, to compensate for fouling in the exchanger, means that the wall temperature of the exchanger, and thereby the fouling rate, is always kept at a minimum during a service cycle.

## Claims

1. Metallic multi-pass heat exchanger for use in the concentration of wet process phosphoric acid in a forced-circulation evaporation loop, characterized in that the heat exchanger is of horizontal design in the evaporation loop, and that the heat exchanger besides an outer case essentially consists of metal tubes having an inner diameter in the 20 to 40 mm size range.

2. Heat exchanger according to claim 1, characterized in that the metal tube permits a flow rate in the 2 to 5 m/s range of the acid passing through the tube.

FIG. 1

0250382

0250382

FIG. 2